(19) Europäisches Patentamt
European Patent Office
Office européen des brevets

(11) EP 1 231 731 A1

(12) # DEMANDE DE BREVET EUROPEEN

(43) Date de publication:
**14.08.2002 Bulletin 2002/33**

(51) Int Cl.[7]: **H04L 1/00**

(21) Numéro de dépôt: **01460074.6**

(22) Date de dépôt: **23.11.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **24.11.2000 FR 0015172**

(71) Demandeur: **Sacet SA**
**35170 Bruz (FR)**

(72) Inventeurs:
- **Grimault, Christophe**
**35740 Pacé (FR)**
- **Testard, Marc**
**35170 Bruz (FR)**

(54) **Procédé et dispositif pour la transmission de symboles utilisant BICM-Turbo**

(57) Le procédé consiste:

- à effectuer dans le dispositif de réception une démodulation (14) des symboles reçus en affectant à chaque symbole courant une valeur de canal associée,
- à associer (15) à chaque bit d'un symbole courant démodulé, une information souple de fiabilité dépendant de la valeur du canal associée,
- à appliquer (19) les informations souples de fiabilité obtenues à un premier décodeur à entrée souple/sortie souple pour déterminer des valeurs de fiabilité à posteriori et les appliquer (20) par itérations successives à l'entrée du démodulateur pour former des fiabilités à priori avec ou sans la valeur du canal associée sur les bits des symboles reçus.

Applications: Transmission de données numériques.

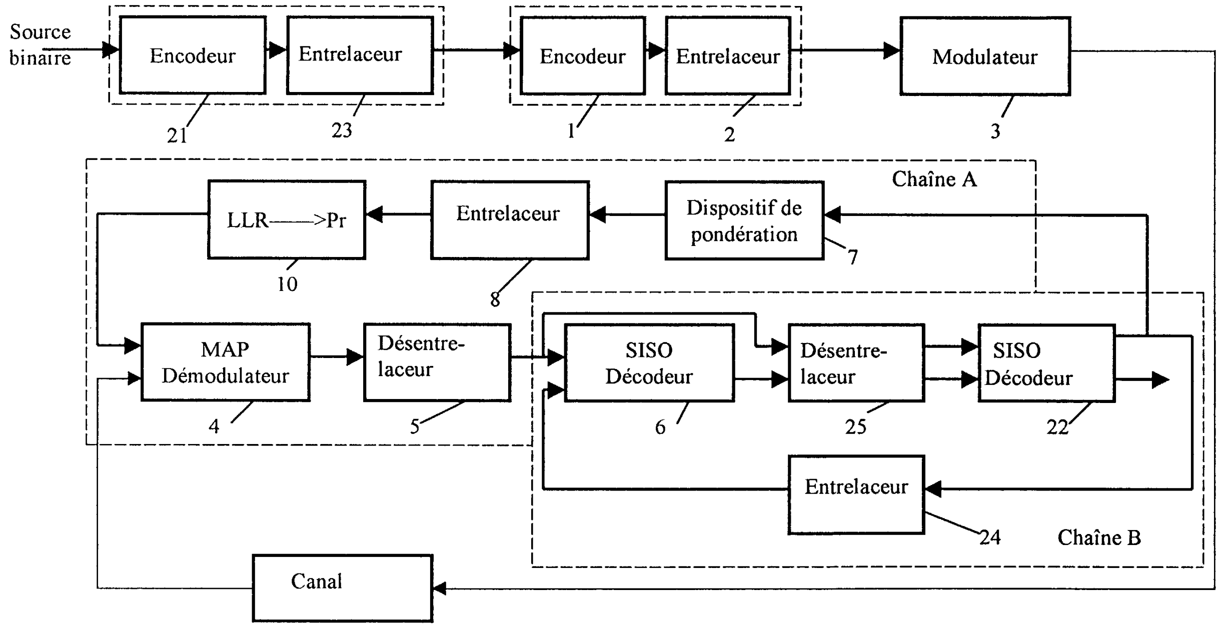


FIG.4

EP 1 231 731 A1

## Description

La présente invention concerne un procédé pour l'émission et la réception sur un canal de transmission de symboles transmis suivant une modulation à plusieurs états d'amplitude et de phase. Plus particulièrement, la présente invention concerne un dispositif d'émission et réception de données numériques et les procédés permettants de les associer de manière optimale afin de réduire le taux d'erreurs binaires dans les systèmes de transmissions numériques.

Elle s'applique tout aussi bien à la transmission de données numériques par liaison filaire ou Hertzienne.

Les procédés de codage sont habituellement utilisés pour réduire le taux d'erreurs binaire (ou TEB) en transmissions numériques. Les procédés de codage les plus puissants, appelés "turbocodes", utilisent au moins deux codeurs. A la différence des décodeurs conventionnels qui fournissent des valeurs binaires (décision "ferme"), les décodeurs dits "SISO" fournissent une estimation de la fiabilité de la décision (décision "souple"). Les décodeurs SISO, abréviation anglo-saxonne de "Soft In, Soft Out" et dont une description peut être trouvée dans un article des auteurs Joachim Hagenauer, Elke Offer et Lutz Papke publié dans la revue IEEE Vol 42 N°2 mars 1996 et ayant pour titre: "Iterative Decoding of Binary Block and Convolutional Codes", sont utilisés pour produire une information dite "extrinsèque", que les décodeurs s'échangent mutuellement afin d'améliorer la qualité de la décision (réduire le nombre d'erreurs binaires) au cours d'un processus itératif. Cette approche du codage de canal est très performante lorsque les modulations employées sont, ou peuvent se ramener, à un type de modulation binaire, telle que par exemple et de manière non exhaustive, la modulation BPSK, abréviation anglo-saxonne de "Binary Phase Shift Keying", la modulation MSK, abréviation anglo-saxonne de "Minimum Shift Keying" ou la modulation QPSK, abréviation anglo-saxonne de "Quaternary Phase Shift Keying".

Avec les modulations PSK et QAM, abréviations anglo-saxonne de "Phase Shift Keying » et "Quadrature Amplitude Modulation", de taille supérieure ou égale à 8, cette approche, comme le montre la thèse M Anne-Marie Picard ayant pour titre : "Concaténation de codes et décodage itératif ; Application des turbocode produits aux transmissions à forte efficacité spectrale" et présentée en 1999 devant l'université de RENNES 1, devient complexe et nécessite de nombreux réglages empiriques. Une solution pour obtenir de bonnes performances est de considérer la modulation comme une forme de codage, dans le plan complexe et de rendement unitaire, puis de mettre en place, à la réception, un processus itératif entre le démodulateur et le ou les décodeurs. Une approche similaire, appelée en anglais BICM-ID, "Treillis coded modulation with bit interleaving and iterative decoding" décrite par les auteurs X. Li et J. A. Ritcey dans la revue IEEE J. SAC, Vol 17, N°4, Avril 1999, et utilisant des constellations 8PSK ou 16QAM et un code convolutif a démontré des performances intéressantes et une complexité raisonnable sur les canaux gaussiens ou à "fading" de Rayleigh. Cependant ce procédé souffre encore d'imperfections.

Le but de l'invention est d'améliorer l'approche précédente, en proposant un procédé d'émission-réception de données numériques mettant en oeuvre un processus itératif à la réception, analogue a ceux utilisés pour les turbocodes, qui met non seulement en jeu un ou plusieurs décodeurs, mais aussi le démodulateur.

A cet effet , l'invention a pour objet REV1.

L'invention a également pour objet un dispositif de transmission de données pour la mise oeuvre du procédé selon l'invention.

Le procédé et le dispositif selon l'invention ont pour principal avantage de permettre la transmission de données numériques avec un gain significatif en taux d'erreurs binaires, en efficacité spectrale et en résistance sur les canaux gaussien et non gaussien tels que, et de manière non limitative, les canaux de Rayleigh, de Rice et les canaux satellites avec bruit de phase. Le procédé et le dispositif peuvent ainsi être appliqués aux transmissions sur tous les types de supports, par exemple et de manière non limitative, les transmissions par voie hertzienne et les transmissions sur support filaire, les émetteurs et les récepteurs pouvant être indifféremment fixes ou mobiles.

D'autres caractéristiques et avantages de l'invention apparaîtront à l'aide de la description qui suit faite en regard des dessins annexés qui représentent:

La figure 1 un premier mode de réalisation d'un dispositif de transmission de données selon l'invention.
La figure 2 le procédé de codage de l'invention côté émission mis sous la forme d'un organigramme.
La figure 3 le procédé de décodage selon l'invention côté réception mis sous la forme d'un organigramme.
La figure 4 un deuxième mode de réalisation d'un dispositif de transmission de données selon l'invention.
La figure 5 un mode de réalisation d'un démodulateur BICM selon l'invention.

Afin d'améliorer les performances des démodulatureurs BICM l'approche selon l'invention consiste à considérer le modulateur d'émission comme une forme de codeur de rendement unitaire, dans les plans réel ou complexe et à utiliser constellations adaptées qui apportent un gain de codage significatif en mode itératif, associés à une technique de démodulation appelée ci-après "MAP souple" capable de prendre en compte des probabilités a priori, provenant du décodeur, et de fournir une information de fiabilité sous une forme souple au démodulateur de réception.

Les codeurs utilisés peuvent être de type blocs ou convolutifs.

De manière non exhaustive, les constellations supportées par l'invention sont de type QPSK, 8PSK, 16PSK, 8QAM, 16QAM, 32QAM et 64QAM.

Le dispositif pour la mise en oeuvre du procédé selon l'invention comprend comme le montre la figure 1 un ou plusieurs couples [encodeurs 1 - entrelaceurs 2] et un modulateur 3 couplés les uns aux autres dans cet ordre en série.

Du côté réception, le dispositif comprend un démodulateur MAP-souple 4, un ou plusieurs couples [désentrelaceurs 5-décodeurs 6], ces éléments étant couplés les uns aux autres dans cet ordre en série. Le décodeur 6 fournit des informations de fiabilités LVR au démodulateur 4 par l'intermédiaire d'un dispositif de pondération 7 et un ou plusieurs entrelaceurs 8 ayant des caractéristiques identiques à celles du ou des entrelaceurs 2 d'émission. Eventuellement, les informations de fiabilités pondérées par le dispositif de pondération 7 sont transformées par un dispositif 10 en probabilités. Cette forme de réalisation de l'invention est appelée par la suite TurboBICMxD, ou *x* est le nombre de codeurs utilisés dans la chaîne. Les *x* codeurs et décodeurs peuvent être organisés en série ou en parallèle.

L'enchaînement des tâches, côté récepteur a lieu selon l'invention de la manière suivante. Les symboles bruités reçus sont d'abord démodulés par le démodulateur MAP-souple 4 sans probabilité a priori sur les bits reçus. Les fiabilités produites sont fournies aux décodeurs 6, qui fournissent une décision, ferme ou souple, sur tous les bits codés (bits d'information et bits de redondance). Dans une seconde passe le démodulateur MAP-souple 6 utilise les probabilités a priori qui ont été calculées par les décodeurs binaires 4, ce qui permet d'améliorer les fiabilités en sortie. Le processus est ainsi itéré jusqu'à ce qu'une condition d'arrêt soit vérifiée. Il est préconisé pour obtenir des performances optimales l'insertion d'un entrelaceur 2 associé à chaque encodeur 1 et un désentrelaceur 5 correspondant à chaque décodeur 6, mais le procédé selon l'invention peut toutefois être mis en oeuvre sans ces dispositifs si des performances moindres restent acceptables.

A chaque encodeur 1 est associé un code qui peut être binaire ou non et dont le type peut être bloc ou convolutif et au modulateur 3 est associée une constellation, dont les points peuvent être situés dans les plans réel ou complexe. Cet ensemble minimum de trois composants tel que décrit ci-dessus est nommé ci-après dispositif «Encodage-Entrelacement-Modulation» ou EEM. A ce dispositif sont associé *x* codes et une modulation, *x* désignant le nombre de codeurs utilisés par le système.

Du côté réception la démodulation est effectuée selon un critère dit « Maximum a posteriori » ou MAP, qui sera explicité par la suite. Les décodeurs 6 sont à entrée souple et à sortie ferme ou souple. L'option à entrée souple et à sortie souple, utilisant des décodeurs SISO du type déjà cité permet d'obtenir les meilleures performances. Cet ensemble minimum de trois composants tel que décrit ci-dessus est nommé ci-après dispositif «Démodulation-Désentrelacement-Décodage» ou DDD. A ce dispositif sont associés *x* codes et une modulation qui sont les mêmes que pour le dispositif EEM. Le dispositif d'émission-réception est par conséquent constitué d'un dispositif EEM côté émission et d'un dispositif DDD côté réception.

Le processus de décodage selon l'invention est caractérisé en ce qu'il utilise un processus itératif, de type « turbo », qui englobe la démodulation et les décodages binaires. Le modulateur 3 et le démodulateur 4 sont de type « Bit Interleaved Coded Modulation », selon la terminologie anglo-saxonne, ou BICM. Lorsque le dispositif ne comprend qu'un seul encodeur 1, le processus est alors nommé TurboBICM1D. Le nombre de codeurs peut être de deux et le processus est alors nommé TurboBICM2D. Le processus n'est cependant pas limité en nombre de codeurs. Le principe de fonctionnement global concernant le premier mode de réalisation TurboBICM1D, représenté sur la figure 1, est résumé par les points suivants:

1- Selon l'idée mère de l'invention la constellation des points formant la modulation est considérée comme une forme de codage sans redondance dans les plans réel ou complexe. Afin d'obtenir un gain significatif, la constellation doit être optimisée. Pour différentes tailles de constellation, des « schéma optimaux » sont représentés en annexe. Il s'agit par conséquent en préliminaire à toute forme de codage de convenir d'une constellation optimale, aux sens turbo-BICM, entre le dispositif EEM et le dispositif DDD. Par la suite la taille de la constellation est notée M. Le logarithme à base deux de M, noté K par la suite, donne le nombre de bits associés à un point de la constellation.

2-Le procédé et le dispositif selon l'invention nécessite le choix d'un code binaire ou non, bloc ou convolutif, de rendement nécessaire et strictement inférieur à 1.

3-Dans le déroulement du processus d'émission, les étapes suivantes référencées de 11 à 14 sur la figure 2 s'enchaînent l'une après l'autre dans la partie EEM:

Au cours de la première étape référencée 11,les bits « sources » sont encodés par l'encodeur 1 pour fournir les bits « codés »,

Au cours de la deuxième étape référencée 12, les bits « codés » sont entrelacés par l'entrelaceur 2. La fonction de l'entrelaceur est d'effectuer une permutation des positions des bits, conformément à une table d'adressage. Les entrelaceurs permettant d'obtenir un fonctionnement optimal en mode TurboBICMxD répondent à des règles de création spécifiques qui sont données dans la suite,
Au cours de la troisième étape référencée 13, les bits sont groupés par blocs de K bits. Chaque bloc de K bits permet de désigner un unique symbole dans la constellation. Ce symbole est émis par le modulateur 3.

Pour permettre la démodulation en réception dans la partie DDD des symboles reçus le processus de réception se déroule selon une première passe selon les étapes référencées successivement de 14 à 20 sur la figure 3.

Lors de la première étape référencée 14, les symboles complexes ($y_n$ sur la figure 1) sont fournis par un récepteur de type connu non représenté, qui peut être de type cohérent ou non cohérent. Dans le premier cas, le démodulateur 4 dispose alors de la suite de symboles reçus et de la suite de valeurs de canal associées à ces symboles. Cette dernière est dénommée par la suite « CSI » (Channel Side Information selon la terminologie anglo-saxonne),

Au cours de la deuxième étape référencée 15, pour chaque symbole reçu, le démodulateur 4 fournit une information souple, appelée fiabilité, sur chacun des K bits composant le symbole. La démodulation peut être du type maximum de vraisemblance ou MV, ou bien utiliser des algorithmes sous-optimaux,
Au cours de la troisième étape référencée 16, la suite des fiabilités associées aux valeurs binaires est désentrelacée par le désentrelaceur 5, qui utilise la matrice d'adressage réciproque de celle utilisée par l'entrelaceur 2 de la partie EEM.

Lors de la quatrième étape référencée 17, la suite des fiabilités associées aux bits reçus sont appliquées comme valeurs de fiabilité a priori sur les entrées du décodeur SISO 6 qui en déduit des valeurs de fiabilité.

Lors de la cinquième étape référencée 18 les fiabilités sont pondérées par un coefficient qui évolue selon l'état global du système et du nombre de passes effectuées.

A la sixième étape référencée 19, ces fiabilités sont entrelacées par l'entrelaceur 8, conformément à la table d'adressage définie par la partie EEM. La sortie de l'entrelaceur 8 fournit une information « a priori » pour le démodulateur 4 sous la forme d'une fiabilité ou d'une probabilité, les deux représentations étant équivalentes,

Les étapes 1 à 6 constituent la première passe de l'algorithme de décodage selon l'invention.

La seconde passe consiste à modifier la démodulation de type "maximum de vraisemblance MV" (ou MV sous optimale) en une démodulation de type « Maximum A Posteriori », dénommée MAP dans ce qui suit. La démodulation MAP peut faire appel à un algorithme optimal ou sous-optimal. Le processus de démodulation utilise alors les fiabilités (ou les probabilités) a priori et les valeurs de canal CSI (si ces dernières sont disponibles) pour démoduler la suite des symboles reçus $y_n$. Le démodulateur 4 fournit, comme à la deuxième étape référencée 15 lors de la première passe, une fiabilité (ou une probabilité) sur chacun des K bits composant chaque symbole. Cette fiabilité est améliorée, par rapport aux valeurs fournies à la première passe, par la connaissance des « probabilités a priori » sur les bits reçus. Le procédé peut ensuite exécuter un nombre de passes supplémentaires par des itérations successives, en retournant à chaque itération, à l'exécution des étapes 16 à 20.

Le nombre d'itérations est déterminé en fonction d'un critère qui dépendant de l'état global du système. Quel que soit le nombre de passes ou d'itérations, la dernière étape référencée 17 de l'algorithme est l'étape de décodage. Pour ce dernier décodage, le décodeur 6 peut ne fournir une sortie que pour les bits d'information, cette sortie pouvant être de type souple ou ferme.

L'enchaînement décrit ci-dessus est le mode de réalisation turboBICM1D.

Dans le mode de réalisation TurboBICM2D du mode de réalisation de la figure 4, un codeur 21 est ajouté dans la chaîne EEM et un décodeur 22 associé est ajouté dans la chaîne DDD. Un entrelaceur 23 et un désentrelaceur 25, peuvent être ajoutés respectivement entre les deux encodeurs 21 et 1, et entre les deux décodeurs 6 et 22. L'entrelaceur 24, identique à l'entrelaceur 23, est alors nécessaire dans la boucle de retour de la chaîne itérative 2. Dans ce mode, les étapes du décodage sont modifiées et on suppose que les deux décodeurs SISO peuvent échanger une information dite « extrinsèque », produite à partir de la sortie habituelle de fiabilité d'un décodeur SISO, sur les bits reçus. Conformément au schéma de la figure 4, il est alors possible de construire deux chaînes itératives. La chaîne A correspond à la chaîne décrite dans le premier mode de réalisation préférentiel. La chaîne B correspond à une chaîne d'itération de type Turbocode possédant une structure qui peut être indifféremment de type parallèle ou série.
Le mode de réalisation à *x* codes consiste à reprendre le premier mode de réalisation décrit ou TurboBICM1D et à remplacer l'exécution de la quatrième étape référencée 17 sur la figure 2, par une étape consistant à décoder la suite des fiabilités associées aux bits par la chaîne itérative B. Pour une itération de la chaîne A, le nombre de sous-itérations réalisées par la chaîne B est décidé suivant un critère qui dépend de l'état global du système.

L'enchaînement de tâches décrit précédemment repose sur une définition spécifique à la présente invention des modulations, entrelaceurs et démodulateurs.

En ce qui concerne la modulation, selon le principe global de mise en oeuvre de l'invention la constellation des points qui définit chaque type de modulation est considérée comme une forme de codage sans redondance dans les plans réel ou complexe. Dans ce qui suit, M désigne la taille de la constellation et le logarithme à base deux de M, noté K, désigne le nombre de bits associés à un point de la constellation. Un certain nombre de schéma de modulation sont décrits ci-après dans l'annexe à la description comme faisant partie de l'invention. Un schéma est ensemble de M valeurs, complexes ou réelles, correspondant aux positions des M symboles de la modulation. A chaque point est associé un des *M* K-uplet de valeurs binaires possible. Le schéma représentant chaque constellation de points permet de définir complètement la modulation.

Les performances obtenu en utilisant un schéma BICM au cours de la première itération dépendent de la distance euclidienne minimale entre le sous-ensemble de points où le bit courant vaut 1 et le sous-ensemble de points où le bit courant vaut 0. Le calcul d'une quantité similaire, évaluée en supposant que chaque bit en dehors du bit courant dans le calcul est connu sans erreur, donne la distance euclidienne minimale contrainte. Cette quantité permet d'évaluer les performances asymptotiques de la modulation. Afin d'obtenir un gain significatif, il est indispensable de rechercher des constellations optimales qui maximisent conjointement ces deux quantités. Enfin, comme la plupart des schémas de constellations trouvés sont catastrophiques, seule la simulation permet de ne conserver que les meilleurs. Pour différentes tailles de constellation, des schémas optimaux, aux sens turbo-BICM, sont présentés en annexe. Toute permutation des K-uplets de bits amène à produire une constellation identique qui fait partie de l'invention. Toute symétrie ou similitude (au sens rotation-homothétie) des symboles complexes amène à produire une constellation identique qui fait partie de l'invention.

En ce qui concerne les entrelaceurs qu'ils produisent une permutation de type transposition matricielle, aléatoire ou pseudo-aléatoire, ceux-ci sont conçus par la suite à partir d'une table d'adressage contenant les valeurs des permutations. Ainsi, pour un entrelaceur de taille P = 6, avec la matrice d'adressage A:

[a0 a1 a2 a3 a4 a5] = [1 4 5 2 0 3]

la série de bits en entrée de l'entrelaceur:

[b0 b1 b2 b3 b4 b5]

est donnée en sortie par:

[b1 b4 b5 b2 b0 b3].

Les matrices d'entrelacement selon l'invention respectent les critères de modularité et de séparation.

a) Modularité : K étant l'ordre de la modulation,les bits dont l'adresse avant entrelacement est de reste *k* après division euclidienne par *K,* doivent être permuté vers une adresse de reste *k* après division euclidienne par *K,*

a) Séparation : les K adresses consécutives permettant d'adresser un symbole de la constellation, doivent avoir des valeurs telle que, quel que soit le couple d'entiers distincts (i,j), désignant deux quelconques de ces *K* bits, on a

$$|a(i) - a(j)| > Lc$$

où Lc est une valeur arbitrairement grande.

En ce qui concerne la démodulation un démodulateur BICM est détaillé sur la figure 5 dans le cas d'une constellation 8PSK. *K* partitions de la constellation représentée par ses symboles $S_m$ ($1<m<M$,) puisque *K* bits notés $[b_0,...,b_{k-1}]$ désignent 1 symbole parmi *M.* Les partitions sont notées *P(b,i),* avec *b* valant 0 ou 1, la valeur binaire associée au bit *i* est donc définie par:

$$P(0, i) = \{ S_m \mid b_i = 0\}$$

$$P(1,i) = \{ S_m \mid b_i = 1\}$$

*P(0,i)* est l'ensemble des symboles de la constellation tel que le bit *i* est à 0 et *P(1,i)* est l'ensemble des symboles de la constellation tel que le bit *i* est à 1.

Les métriques produites lors de la première passe sont les suivantes. Lors de la première passe le démodulateur 4 doit produire un vecteur de dimension *K* pour chaque symbole reçu. Cette estimation souple des *K* bits composant le vecteur est représentable par une expression de la forme:

$$V_n = [\nu_n^0, \nu_n^1, ..., \nu_n^{k-1}]$$

Etant donné une observation $y_n$, le démodulateur 4 produit la probabilité que le bit de rang i soit égal à 0 ou 1 (valeur de b) suivant la relation:

$$\Pr( v_n^i = b \mid y_n ) = \sum_{s \in P(b,i)} \Pr( y_n \mid s ) \Pr( s )$$

En considérant que lors de la première passe, les différents symboles de la constellation sont équiprobables, soit *Pr(s)=1/M,* et en utilisant les métriques classiques associées au canal sur lequel la transmission s'effectue, les LRV ou logarithmes des rapports de vraisemblance pour chaque bit *i* sont calculés par la relation:

$$\lambda_n^i = \log \frac{\sum_{s \in P(1,i)} \Pr( y_n \mid s )}{\sum_{s \in P(0,i)} \Pr( y_n \mid s )}$$

Une simplification de ce calcul peut aussi être utilisée. Par exemple, et de manière non exhaustive, la somme de distances au numérateur peut être remplacée par la distance minimale trouvée. De même pour le dénominateur. Le procédé selon l'invention peut utiliser indifféremment les LRV ou une quantité sous-optimale. De plus, les métriques peuvent être modifiées pour proposer un fonctionnement optimal sur les canaux à fading.

Les métriques produites lors de la deuxième passe sont les suivantes. A partir de la seconde passe, le démodulateur rentre dans un processus itératif qui, selon l'invention, doit permettre d'améliorer la valeur des fiabilités produites par le démodulateur. Pour cela, le démodulateur doit abandonner la métrique de type Maximum de Vraisemblance, utilisée à la première passe, et prendre en compte les fiabilités qui sont fournies par la boucle de retour venant du ou des décodeurs binaires, et ceci pour chaque bit reçu. Le démodulateur est alors dit « MAP » et peut prendre en entrée, soit des valeurs de fiabilités, soit des probabilités. Les LRV sont alors donnés par :

$$\lambda_n^i = \log \frac{\sum_{s \in P(1,i)} \Pr( y_n \mid s ) \prod_{j=0, j \neq i}^{k-1} \Pr( v_n^j )}{\sum_{s \in P(0,i)} \Pr( y_n \mid s ) \prod_{j=0, j \neq i}^{k-1} \Pr( v_n^j )}$$

Les LRV fournis par le décodeur de canal permettent de calculer les probabilités à 0 ou à 1 pour chaque bit :

$$\Pr( v_n^j = 1) = 1 - \Pr( v_n^j = 1)$$

$$\Pr(v_n^j = 0) = \frac{1}{1 + e^{LRV(v_n^j)}}$$

Le procédé selon l'invention peut utiliser, là encore indifféremment, le calcul complet des LRV ou une approximation de ce calcul. De plus, les métriques peuvent aussi être modifiées pour proposer un fonctionnement optimal sur les canaux à fading.

Pour le codage par code en blocs et leur décodage par un décodeur à entrée souple et sortie ferme il est possible d'utiliser un décodeur à entrée souple et sortie ferme, dit par ré - ordonnancement et retraitement, du type décrit par MM Fossorier et Lin dans un article ayant pour titre "Soft decision decoding of linear block codes based on statistics" publié dans la revue IEEE Trans Information Theory, 41 (5), 1995, qui est générique pour tout type de code en bloc. Dans ce cas, les sorties fermes des décodeurs 6 et 22, appartenant à la chaîne itérative 2, peuvent, selon l'invention, servir à définir une information souple sur un nombre fini de niveau. Dans ce mode préférentiel de réalisation, les décisions fermes sont ajoutées. Par exemple, en supposant que la chaîne itérative B comprenne trois décodeurs binaires, pour un bit quelconque $b_i$, les décisions des 3 décodeurs (indicées 0,1 et 2) sont :

$$[d_i^0, d_i^1, d_i^2]$$

où $d_i^n$ vaut +1 si le bit *i* est décidé comme valant 0 et -1 si le bit *i* est décidé comme valant 1. L'information souple fournie au démodulateur MAP pour l'itération à venir est alors

$$d_i^0 + d_i^1 + d_i^2$$

et peut prendre les valeurs -3, -1 , 1 et 3. La décision binaire, qui peut être prise à la dernière itération, correspond à une logique de décision majoritaire ou MLD (pour Majority Logic Decision selon la terminologie anglo-saxonne). Ce mode de réalisation est appelé TurboBICMxD-MLD. Le nombre de codeurs-décodeurs, dans ce mode, doit être supérieur ou égal à deux.

Pour le décodage de codes en blocs à l'aide d'un décodeur à entrée souple et sortie souple il peut également être utilisé un décodeur à entée souple et sortie ferme du type décrit dans l'article de MM Lin et Fossorier déjà cité. Une extension de la méthode permet de garantir une sortie souple pour tous les bits (bits d'information et bits de redondance). Le décodeur est alors du type SISO et est utilisable dans chaque décodage bloc.

ANNEXE

Les schémas de modulation recommandés pour la mise en oeuvre de l'invention sont formés par des constellations de M= 4,8,16,32 et 64 points.
Les constellations à M = 4 points (K=2) sont au nombre de 2. Elles sont décrites par les suite de valeurs suivantes:

| N° | Symbole | K-uplets | |
|---|---|---|---|
| 1 | 1 + 1i | 00 | 00 |
| 2 | -1 + 1i | 11 | 11 |
| 3 | -1 - 1i | 10 | 01 |
| 4 | +1 - 1i | 01 | 10 |

Les constellations à M = 8 points (K=3) sont au nombre de 2. Elles sont décrites par la suite de valeurs suivantes, où a est la racine carrée de 2 :

| N° | Symbole | K-uplets | |
|---|---|---|---|
| 1 | 1 + 0i | 000 | 000 |
| 2 | a*( 1 + 1i) | 001 | 001 |
| 3 | 0 + 1i | 010 | 010 |
| 4 | a*(-1 + 1i) | 011 | 011 |
| 5 | -1 + 0i | 100 | 110 |
| 6 | a*(-1 - 1i) | 101 | 111 |
| 7 | 0 - 1i | 110 | 100 |
| 8 | a*( 1 - 1i) | 111 | 101 |

Les constellations à M = 16 points (K=4) sont au nombre de 2 et sont décrites par la suite de valeurs suivantes :

| N° | Symbole | K-uplets | |
|---|---|---|---|
| 1 | -3 + 3i | 0101 | 0010 |
| 2 | -3 + 1i | 1110 | 1010 |
| 3 | -3 - 1i | 1101 | 1001 |
| 4 | -3 - 3i | 0110 | 0001 |
| 5 | -1 + 3i | 0100 | 0100 |
| 6 | -1 + 1i | 0111 | 1100 |
| 7 | -1 - 1i | 1100 | 1111 |

(suite)

| N° | Symbole | K-uplets | |
|---|---|---|---|
| 8 | -1 - 3i | 1111 | 0111 |
| 9 | 1 + 3i | 1001 | 1101 |
| 10 | 1 + 1i | 0010 | 0101 |
| 11 | 1 - 1i | 0001 | 0110 |
| 12 | 1 - 3i | 1010 | 1110 |
| 13 | 3 + 3i | 1000 | 1011 |
| 14 | 3 + 1i | 1011 | 0011 |
| 15 | 3 - 1i | 0000 | 0000 |
| 16 | 3 - 3i | 0011 | 1000 |

Les constellations à M = 32 points (K=5) sont au nombre de 1. Elle est décrite par la suite de valeurs suivantes:

| N° | Symbole | K-uplets |
|---|---|---|
| 1 | -3 + 5i | 00000 |
| 2 | -1 + 5i | 10100 |
| 3 | 1 + 5i | 00010 |
| 4 | 3 + 5i | 00110 |
| 5 | -5 + 3i | 10000 |
| 6 | -3 + 3i | 11100 |
| 7 | -1 + 3i | 11000 |
| 8 | 1 + 3i | 11110 |
| 9 | 3 + 3i | 11010 |
| 10 | 5 + 3i | 10110 |
| 11 | -5 + 1i | 00100 |
| 12 | -3 + 1i | 01000 |
| 13 | -1 + 1i | 01100 |
| 14 | 1 + 1i | 01010 |
| 15 | 3 + 1i | 01110 |
| 16 | 5 + 1i | 10010 |
| 17 | -5 - 1i | 00011 |
| 18 | -3 - 1i | 11111 |
| 19 | -1 - 1i | 11011 |
| 20 | 1 - 1i | 11101 |
| 21 | 3 - 1i | 11001 |
| 22 | 5 - 1i | 10101 |
| 23 | -5 - 3i | 00111 |
| 24 | -3 - 3i | 01011 |
| 25 | -1 - 3i | 01111 |
| 26 | 1 - 3i | 01001 |
| 27 | 3 - 3i | 01101 |
| 28 | 5 - 3i | 00001 |
| 29 | -3 - 5i | 10111 |
| 30 | -1 - 5i | 10011 |
| 31 | 1 - 5i | 00101 |
| 32 | 3 - 5i | 10001 |

Les constellations à M = 64 points (K=6) sont au nombre de 1. Elle est décrite par la suite de valeurs suivantes:

| N° | Symbole | K-uplets |
|---|---|---|
| 1 | -7 + 7i | 000000 |
| 2 | -7 + 5i | 001001 |
| 3 | -7 + 3i | 100100 |
| 4 | -7 + 1i | 101101 |
| 5 | -7 - 1i | 010000 |
| 6 | -7 - 3i | 011001 |
| 7 | -7 - 5i | 110100 |
| 8 | -7 - 7i | 111101 |
| 9 | -5 + 7i | 000001 |
| 10 | -5 + 5i | 001000 |
| 11 | -5 + 3i | 100101 |
| 12 | -5 + 1i | 101100 |
| 13 | -5 - 1i | 010001 |
| 14 | -5 - 3i | 011000 |
| 15 | -5 - 5i | 110101 |
| 16 | -5 - 7i | 111100 |
| 17 | -3 + 7i | 000100 |
| 18 | -3 + 5i | 001101 |
| 19 | -3 + 3i | 100000 |
| 20 | -3 + 1i | 101001 |
| 21 | -3 - 1i | 010100 |
| 22 | -3 - 3i | 011101 |
| 23 | -3 - 5i | 110000 |
| 24 | -3 - 7i | 111001 |
| 25 | -1 + 7i | 000101 |
| 26 | -1 + 5i | 001100 |
| 27 | -1 + 3i | 100001 |
| 28 | -1 + 1i | 101000 |
| 29 | -1 - 1i | 010101 |
| 30 | -1 - 3i | 011100 |
| 31 | -1 - 5i | 110001 |
| 32 | -1 - 7i | 111000 |
| 33 | 1 + 7i | 000010 |
| 34 | 1 + 5i | 001011 |
| 35 | 1 + 3i | 100110 |
| 36 | 1 + 1i | 101111 |
| 37 | 1 - 1i | 010010 |
| 38 | 1 - 3i | 011011 |
| 39 | 1 - 5i | 110110 |
| 40 | 1 - 7i | 111111 |
| 41 | 3 + 7i | 000011 |
| 42 | 3 + 5i | 001010 |
| 43 | 3 + 3i | 100111 |
| 44 | 3 + 1i | 101110 |
| 45 | 3 - 1i | 010011 |
| 46 | 3 - 3i | 011010 |
| 47 | 3 - 5i | 110111 |
| 48 | 3 - 7i | 111110 |
| 49 | 5 + 7i | 000110 |
| 50 | 5 + 5i | 001111 |

(suite)

| N° | Symbole | K-uplets |
|---|---|---|
| 51 | 5 + 3i | 100010 |
| 52 | 5 + 1i | 101011 |
| 53 | 5 - 1i | 010110 |
| 54 | 5 - 3i | 011111 |
| 55 | 5 - 5i | 110010 |
| 56 | 5 - 7i | 111011 |
| 57 | 7 + 7i | 000111 |
| 58 | 7 + 5i | 001110 |
| 59 | 7 + 3i | 100011 |
| 60 | 7 + 1i | 101010 |
| 61 | 7 - 1i | 010111 |
| 62 | 7 - 3i | 011110 |
| 63 | 7 - 5i | 110011 |
| 64 | 7 - 7i | 111010 |

## Revendications

**1.** Procédé de transmission sur un canal reliant un dispositif d'émission à un dispositif de réception comportant un démodulateur (4), d'une suite de symboles suivant une modulation à plusieurs états d'amplitude et de phase, chaque symbole étant codé sur un nombre déterminé K de bits et étant représenté dans le plan complexe par un point d'une constellation de M points représentatifs chacun d'un état d'amplitude et de phase de la modulation du type consistant:

- à effectuer dans le dispositif de réception une démodulation (14) des symboles reçus en affectant à chaque symbole courant une valeur de canal associée,
- à associer (15) à chaque bit d'un symbole courant démodulé, une information souple de fiabilité dépendant de la valeur du canal associée,
- à appliquer (19) les informations souples de fiabilité obtenues à un premier décodeur (6) à entrée souple/sortie souple pour déterminer des valeurs de fiabilité à posteriori et les appliquer par itérations successives à l'entrée du démodulateur (4) pour former des fiabilités à priori avec ou sans la valeur du canal associée sur les bits des symboles reçus,

**caractérisé en ce qu'**il consiste à utiliser pour la transmission un codage de la constellation de symboles obtenu en effectuant conjointement une optimisation de la distance euclidienne minimale entre tous les ensembles déterminés par le bit courant à transmettre et une maximisation de la distance euclidienne minimale entre les sous-ensembles déterminés par le bit courant, connaissant les autres bits, et à effectuer en réception le décodage (20) par exécution d'un algorithme de réordonnancement et retraitement de Fossorier et Lin en pondérant (18) des valeurs de fiabilité à posteriori par un coefficient qui dépend de l'état global du système de transmission et du nombre d'itérations effectuées.

**2.** Procédé selon la revendication 1 **caractérisé en ce qu'**il met en oeuvre des schémas de modulation à 4, 8, 16, 32, 64 états de phase tels que défini dans l'annexe de la description

**3.** Procédé selon les revendications 1 et 2 **caractérisé en ce qu'**il consiste:

- à effectuer avant émission un entrelacement (12) des bits de chaque symbole courant à émettre, l'entrelacement lié au codes étant aléatoire et respectant des critères de modularité et de séparation
- à désentrelacer (16) dans le dispositif de réception les informations souples de fiabilité suivant une loi de permutation inverse de celle utilisée à l'émission,
- et à entrelacer (19) les fiabilités à posteriori obtenues en sortie du premier décodeur (6) à entrée souple /sortie souple suivant une loi de permutation identique à celle utilisée pour l'entrelacement à l'émission, pour former des fiabilités à priori utilisables par le démodulateur (4) avec ou sans la valeur du canal associée à la démodulation du symbole suivant le symbole courant,

**4.** Procédé selon l'une quelconque des revendications 1 à 3 **caractérisé en ce qu'**il consiste:

- à décoder la suite des fiabilités associées aux bits par un deuxième décodeur (22) à entrée souple /sortie souple, pour obtenir des valeurs de fiabilité à posteriori modifiées,
- à pondérer (19) les valeurs de fiabilité à posteriori modifiées, pour fournir des valeurs de fiabilité à priori au démodulateur sur les symboles reçus.

**5.** Procédé selon l'une quelconque des revendications 1 à 4 **caractérisé en ce qu'**il consiste pour le décodage de codes en bloc à utiliser des décodeurs (6) à entrée souple sortie ferme associé à une logique de décision majoritaire.

**6.** Procédé selon l'une quelconque des revendications 1 à 5 **caractérisé en ce que** les codes binaires sont organisés en série ou en parallèle.

**7.** Procédé selon l'une quelconque des revendications 1 à 6 **caractérisé en ce qu'**il consiste à faire effectuer à l'intérieur d'une itération dans le premier décodeur plusieurs itérations dans le deuxième décodeur (22) lorsque le nombre de codeurs est supérieur à 1.

**8.** Procédé selon l'une quelconque des revendications 1 à 7 **caractérisé en ce qu'**il consiste à inclure le démodulateur (4) dans le processus itératif, le démodulateur prenant en compte les probabilités sur chacun des bits reçus pour effectuer une démodulation de type Maximum A Posteriori ou MAP.

**9.** Dispositif pour la mise en oeuvre du procédé selon l'une quelconque des revendications 1 à 8 **caractérisé en ce qu'**il comprend côté émission au moins un encodeur (1) couplé à un modulateur (3) au travers d'au moins un entrelaceur (2), et **en ce qu'**il comprend côté réception un démodulateur (4) couplé à au moins un décodeur (6), le décodeur (6) fournissant des valeurs de fiabilité à posteriori au démodulateur (4).

**10.** Dispositif selon la revendication 9 **caractérisé en ce qu'**il comprend côté réception un deuxième décodeur (22) couplé en sortie du premier décodeur (6), les sorties du deuxième décodeur (22) fournissant des valeurs de fiabilité à posteriori au démodulateur (4).

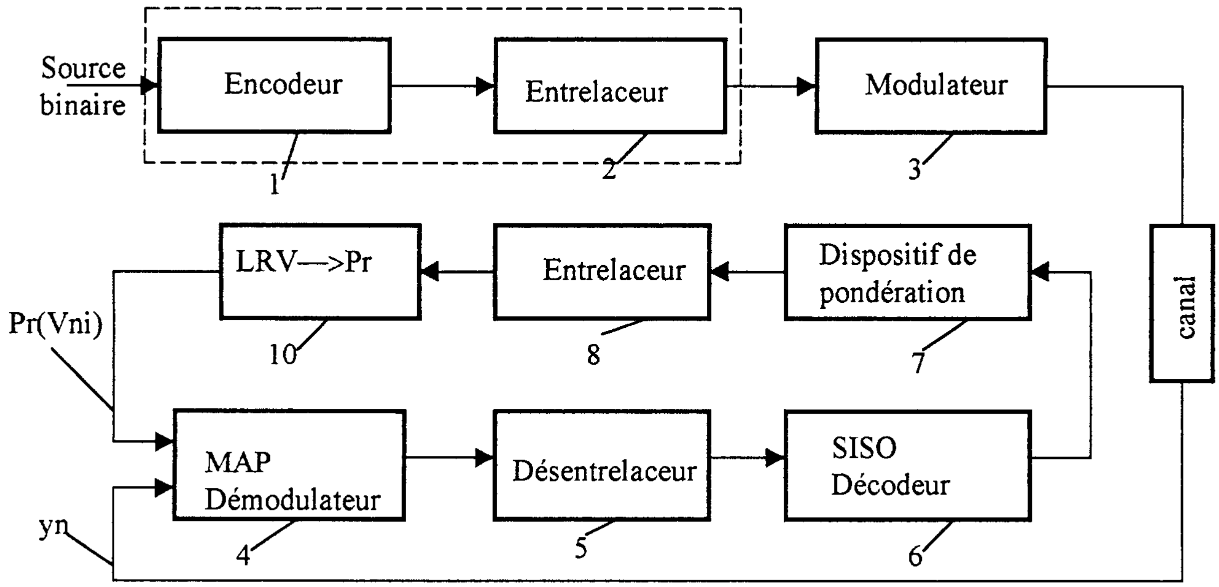
Source binaire
Encodeur
Entrelaceur
Modulateur
1
2
3
LRV—>Pr
Entrelaceur
Dispositif de pondération
canal
Pr(Vni)
10
8
7
MAP Démodulateur
Désentrelaceur
SISO Décodeur
yn
4
5
6

FIG. 1

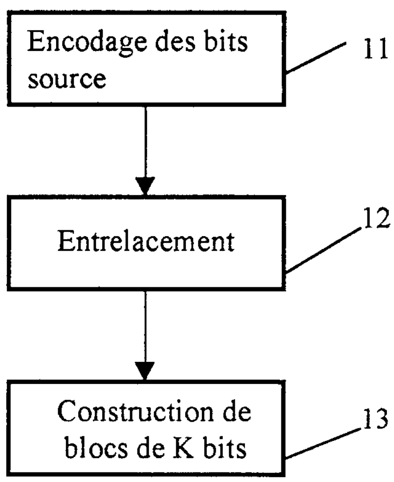
Encodage des bits source
11
Entrelacement
12
Construction de blocs de K bits
13

FIG. 2

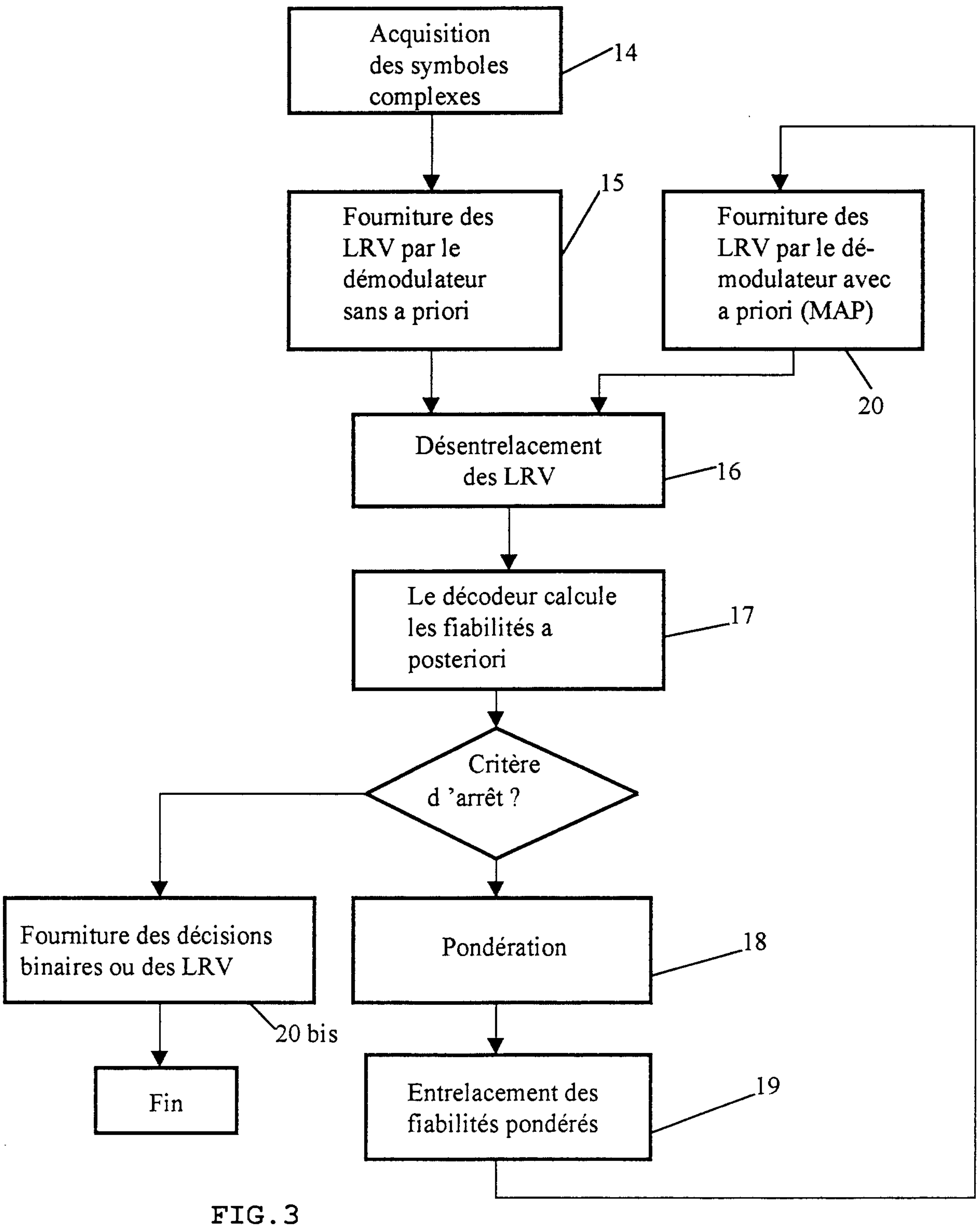
Acquisition des symboles complexes
14
Fourniture des LRV par le démodulateur sans a priori
15
Fourniture des LRV par le démodulateur avec a priori (MAP)
20
Désentrelacement des LRV
16
Le décodeur calcule les fiabilités a posteriori
17
Critère d 'arrêt ?
Fourniture des décisions binaires ou des LRV
20 bis
Fin
Pondération
18
Entrelacement des fiabilités pondérés
19

FIG.3

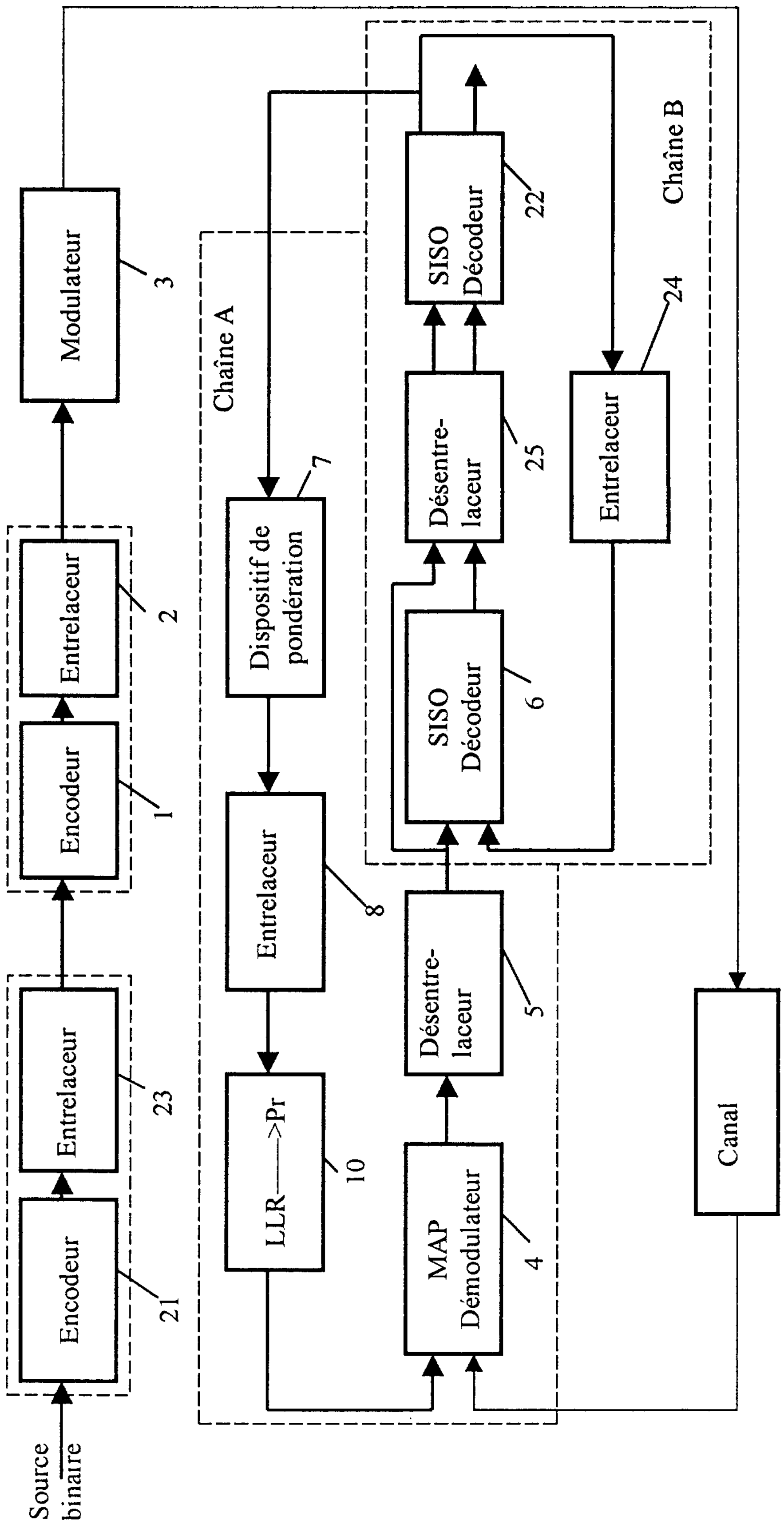
Source binaire
Encodeur
21
Entrelaceur
23
Encodeur
1
Entrelaceur
2
Modulateur
3
Chaîne A
Dispositif de pondération
7
Entrelaceur
8
LLR——>Pr
10
MAP Démodulateur
4
Désentre-laceur
5
SISO Décodeur
6
Désentre-laceur
25
SISO Décodeur
22
Entrelaceur
24
Chaîne B
Canal

FIG. 4

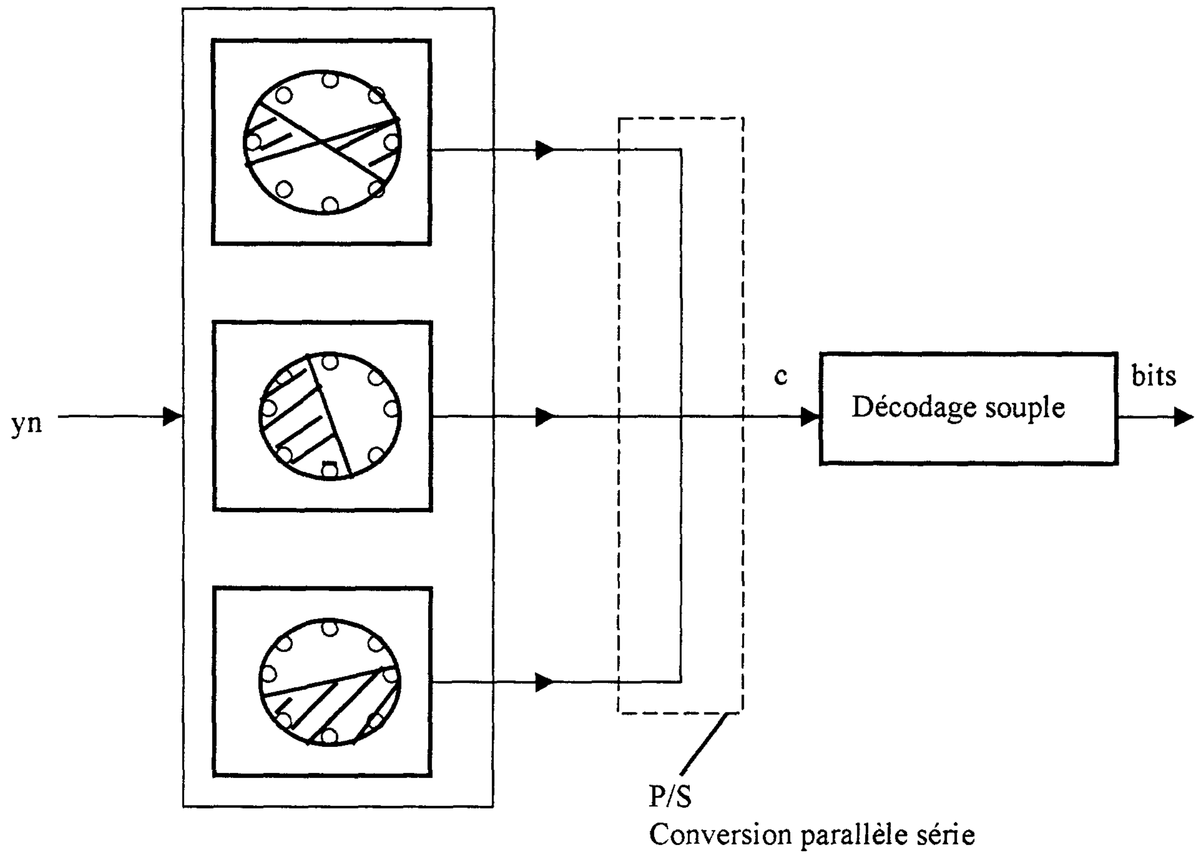


FIG. 5

Office européen des brevets

# RAPPORT DE RECHERCHE EUROPEENNE

Numéro de la demande
EP 01 46 0074

| Catégorie | DOCUMENTS CONSIDERES COMME PERTINENTS — Citation du document avec indication, en cas de besoin, des parties pertinentes | Revendication concernée | CLASSEMENT DE LA DEMANDE (Int.Cl.7) |
|---|---|---|---|
| A | ABRAMOVICI I ET AL: "ON TURBO ENCODED BICM" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, vol. 54, no. 3/4, mars 1999 (1999-03), pages 225-234, XP000834645 ISSN: 0003-4347<br>* abrégé *<br>* page 226, colonne de droite, alinéa 6 - page 227, colonne de droite, alinéa 4 *<br>* page 228, colonne de gauche, alinéa 4 *<br>* page 230, colonne de gauche, alinéa 1 - alinéa 4 *<br>* figure 2 * | 1-4,6, 8-10 | H04L1/00 |
| A | EP 0 949 779 A (NORTEL NETWORKS CORP) 13 octobre 1999 (1999-10-13)<br>* colonne 5, ligne 4 - colonne 6, ligne 48 * | 1,3,4, 8-10 | |
| | | | DOMAINES TECHNIQUES RECHERCHES (Int.Cl.7) |
| A | EP 0 980 148 A (NOKIA MOBILE PHONES LTD) 16 février 2000 (2000-02-16)<br>* colonne 3, ligne 35 - colonne 4, ligne 20 *<br>* colonne 4, ligne 34 - ligne 55 *<br>* colonne 7, ligne 19 - colonne 8, ligne 35 *<br>* figure 2 * | 1,3,9 | H04L |
| | -/-- | | |

Le présent rapport a été établi pour toutes les revendications

| Lieu de la recherche | Date d'achèvement de la recherche | Examinateur |
|---|---|---|
| LA HAYE | 7 juin 2002 | Litton, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 01 46 0074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | MARC P.C. FOSSORIER AND SHU LIN: "Soft-Decision Decoding of Linear Block Codes Based on Ordered Statistics" IEEE TRANSACTIONS ON INFORMATION THEORY, vol. 41, no. 5, septembre 1995 (1995-09), pages 1379-1396, XP002174653 * abrégé * * page 1380, colonne de gauche, alinéa 4 - colonne de droite, alinéa 1 * | 1 | |
| A | CHRIS HEEGARD AND STEPHEN B. WICKER: "Turbo Coding" , KLUWER ACADEMIC PUBLISHERS XP002174654 * page 50 - page 54 * | 3 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 7 juin 2002 | Litton, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 01 46 0074

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

07-06-2002

| Document brevet cité au rapport de recherche | | Date de publication | Membre(s) de la famille de brevet(s) | | Date de publication |
|---|---|---|---|---|---|
| EP 0949779 | A | 13-10-1999 | EP | 0949779 A2 | 13-10-1999 |
| EP 0980148 | A | 16-02-2000 | FI | 981745 A | 13-02-2000 |
| | | | EP | 0980148 A2 | 16-02-2000 |

EPO FORM P0460

Pour tout renseignement concernant cette annexe : voir Journal Officiel de l'Office européen des brevets, No.12/82